# EUROPEAN PATENT SPECIFICATION

(11) **EP 1 113 207 B1**
(45) Date of publication and mention of the grant of the patent: **10.05.2006**
(21) Application number: 00850213.0
(22) Date of filing: 14.12.2000
(51) Int. Cl.: F16L 3/10, F16L 3/237, F16L 9/02

(54) **Pipe and device for fixation of pipes**
Rohr und Vorrichtung zur Befestigung von Rohren
Tuyau et dispositif pour la fixation de tuyaux

(30) Priority: 14.12.1999 SE 9904598
(43) Date of publication of application: 04.07.2001
(73) Proprietor: VOLVO LASTVAGNAR AB, 405 08 Göteborg (SE)
(72) Inventor: Knezevic, Drago, 423 53 Torslanda (SE)
(74) Representative: Hammond, Andrew David

(56) References cited:
- EP-A- 0 625 662
- DE-U- 1 782 755
- GB-A- 1 414 615
- US-A- 3 954 238
- US-A- 5 839 703
- PATENT ABSTRACTS OF JAPAN vol. 1997, no. 12, 25 December 1997 (1997-12-25) & JP 09 210256 A (ITO GIKEN:KK), 12 August 1997 (1997-08-12)

## Description

The invention relates to a device for fixation of pipes according to the preamble of claim 1, and a pipe and such a device for fixation of pipes. In particular, the invention relates to a device for fixation of a pipe to a vibrating foundation, such as, for example an internal combustion engine, where great demands are placed upon the ability of the device to fixate the pipe, in order to prevent relative movement between the engine and the pipe.

Devices for fixation of pipes in such a way as to avoid rotational and axial movement of the fixated pipe are previously known.

From US 5,839,703 is previously known a clip, comprised of a substantially U-shaped foil with two vertical lateral walls and a horizontal upper wall, which unites said lateral walls. In each of the lateral walls, a resilient lip is arranged. Said lip is shaped from a partial area of said lateral wall, which area is attached to the lateral wall, and extends from the attachment, obliquely towards the opposite lateral wall and said upper wall. The pipe is fixated by the fixating device by pressing the pipe past sad resilient lips, whereby the pipe subsequently is pressed by the lips against the upper wall, while at the same time the tube is prevented from rotating by being in contact with the respective lateral wall. In order to ascertain that fixation takes place in a satisfactory manner, the pipe is designed with an area of rectangular cross-section. Fixation in the longitudinal direction of the pipe takes place by the pipe exhibiting shoulders at the transition from the area of rectangular cross-section to the normal, circular cross-section of the pipe. The length of the area exhibiting a rectangular cross-section is adjusted to conform to the length of the clip.

Further, from US 4,826,114, another type of clip for holding pipes is known, which takes advantage of the occurrence of a deformed area on the pipe. This pipe clip is designed for a pipe exhibiting a mantle surface with a cross-section comprising one or more circle segments extending along the major part of the periphery of the pipe, and one or two areas in which the cross-section is formed by cordae that connect said circle segments. Thus, the pipe exhibits a substantially circularly cylindrical mantle surface with one or two recessed flat surfaces. The pipe is fixated in longitudinal direction because the extension of the deformed areas in the longitudinal direction of the pipe corresponds to the longitudinal extension of the clip.

A multi-point tube clamp is known from EP-A-0 625 662 which comprises all the features of the preamble of claim 1 and comprises a base plate and a capture plate for capturing a tube therebetween. The base plate includes a first recess therein for receiving the tube, which recess includes three adjoining sides sized and configured for contacting the tube at two points. In one embodiment, the capture plate includes a similar recess.

When using a clip, such as disclosed in US 5,839,703, in heavily vibrating environments, such as when fixating a pipe in connection to internal combustion engines, a number of problems arise. The clip disclosed in US 5,839,703 consists of a metal foil with resilient lips, intended for being pushing the pipe against the upper wall. The lips have to be designed weak enough in order to allow the pipe to be forced across them. This means that the pipe is retained by a relatively weak counter-resilience, which may give rise to oscillation of the pipe in the clip, against the lips. Further, because the construction is being shaped from a metal foil, it is as a whole relatively weak, which entails a risk that the pipe is forced out of position, axially as well as radially, when the pipe is subjected to large forces. Further, the pipe has to be heavily deformed, since it exhibits a rectangular cross-section. This means that high tension arises along the edge connecting the planar surfaces. This entails a risk of crack formation in the pipe, in particular if the pipe is deformed without prior heating, which is practise if the pipe is deformed in-situ prior to mounting. Further, the rectangular cross-section implies a large deviation from a circular cross-section, which means that the streaming through the rectangular cross-section is disturbed considerably, resulting in increased streaming losses. The pipe will exhibit a considerably reduced cross-sectional area at the rectangular cross section.

The clip disclosed in US 4,826,114 is also afflicted with similar problems with regard to the weak construction of the clip. Furthermore, according to its two described embodiments, this clip only exhibits one or two planar surfaces in the mantle area of the pipe. This means that sufficient resistance towards twisting cannot be obtained.

The object of the invention is to provide a device for fixation of a pipe, in particular in connection to a vibrating foundation, such as, for example, an internal combustion engine, where the device provides a fixation of a pipe that allows sufficient resistance, on the one hand against rotation of the pipe, and on the other hand against displacement of the pipe in the longitudinal direction of the pipe. A second object of the invention is to provide a combination of pipe and device for the fixation of said pipe, where the device provides a fixation of a pipe, which fixation allows sufficient resistance against rotation of the pipe, and against displacement of the pipe in the longitudinal direction of the pipe, while at the same time reducing the streaming resistance in the deformed area.

Said object is achieved through a device for fixation of a pipe in connection to a vibrating foundation, which has been designed in accordance with claim 1, and a pipe and device for fixation of said pipe, which have been designed in accordance with claim 9.

According to a first preferred embodiment of the invention, the device for fixation of a pipe is supplied with a first holding member, exhibiting a wedge-shaped groove comprising first and second flat walls, which are intended to bear against, during pinching of said pipe, two corresponding surfaces of the pipe, and a second holding member which comprises at least two flat surfaces intended to bear against, during pinching of said pipe, corresponding surfaces of the pipe. By designing the first holding member with a wedge-shaped groove, the lateral surfaces of which are shaped to bear against two of the surfaces of the pipe within an area of the pipe with a polygon-shaped cross-section, a good fixation of the pipe is obtained, by the conical centering of the pipe that takes place.

According to a further preferred embodiment of the invention the pipe is designed with a hexagonal cross-section. By designing the pipe with a hexagonal cross-section, a lower strain in the edges that unite the six planar surfaces forming a deformed area of the pipe is obtained than if a rectangular cross section were used, whereby the risk of cracking of the pipe is reduced. This entails that the need for surface treatment of the pipe after deformation is eliminated. Further, through the utilisation of a hexagonal cross-section, the area reduction at the junction between the un-deformed area with a circular cross section and the deformed area with a hexagonal cross-section is reduced, compared to the case in which a rectangular cross-section is used. Generally, the deformation of the pipe is reduced as a function of the number of sides of the polygon-shaped cross-section, whereby the streaming resistance is reduced as a function of increased number of sides. Further, the fixating ability of the clip is reduced with an increasing number of lateral surfaces. A reason for this is that the total area with which the holding member bears against the pipe is decreased with an increased number of sides, when designing with normal tolerances. The reason for this is that the pipe cannot be designed with a cross-section in which all sides are of exactly the same width, and are inclined with exactly the same angle with respect to each other. Another reason is that less deformation of the pipe and the holding member is required to turn the pipe in the holding member. In order to avoid play within the junction, every holding member should preferably bear against a maximum of two lateral surfaces only. In the most preferred embodiment the pipe is designed with a hexagonal cross-section.

By designing the holding member with a first holding member, intended during pinching of a pipe to bear against two of the six sides of the pipe, a fixation device is achieved which is extraordinarily resistant to twisting. Through this design a conical centering of the pipe is achieved towards the holding member, whereby said excellent fixation is achieved.

By designing the pipe with a second holding member, intended to bear against two of the remaining sides of the pipe a fixating device is obtained, in accordance with a preferred embodiment, which is particularly resistant to twisting, and in which the demand for a precisely equilateral distribution of the sides of the hexagon is avoided.

In a servo system arranged at a cargo vehicle, the demands that the inlets and outlets be well fixated are extremely high. In another preferred embodiment a first and a second pipe, constituting inlets and outlets of a servo system included in a cargo vehicle, are fixated by holding members in connection to an internal combustion engine, arranged in a cargo vehicle.

### Description of the figures

An embodiment of the invention will be described below in greater detail with reference to the enclosed drawing figures in which:
Fig. 1 shows a side view of the fixation device,

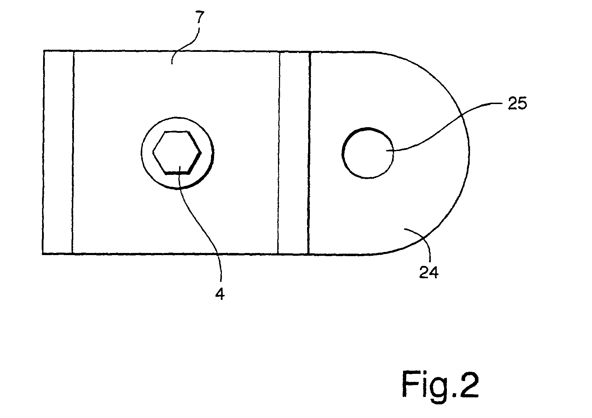

Fig. 2 shows a planar view of the fixation device,
Fig. 3 shows a perspective view of the components of the fixation device, including the deformed pipe, and

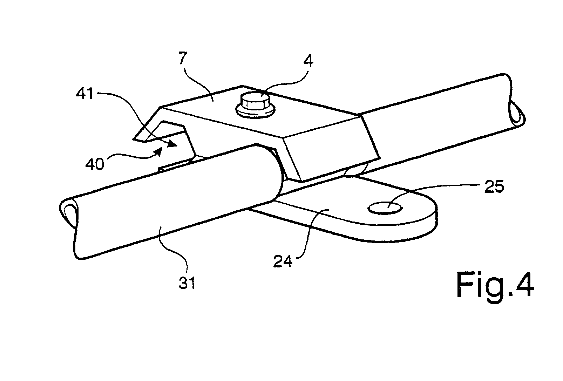

Fig. 4 shows a perspective view of the fixation device with the pipe mounted.

### Preferred embodiment

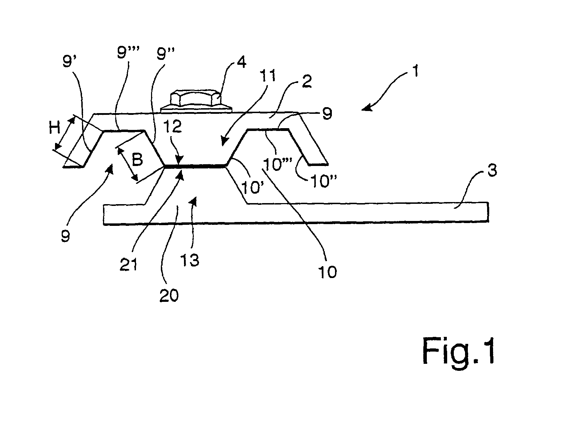

Fig. 1 shows a device for fixation of a pipe, which device is generally designated as 1. The device comprises a first holding member 2, a second holding member 3, and a locking member 4 for fixation of the holding members against each other, whereby locking of a pipe can be attained. The locking member is designed in the shape of a nipple, and comprises a threaded screw 4, arranged to run through an inlet 5 arranged in the first holding member 2, and grip the threading 6 arranged in a hole arranged in the second holding member 3.

A recess 41 is formed from a wedge-shaped groove 9 of the first holding member and two or more limiting surfaces of the second holding member, e.g. a corresponding groove positioned at the second holding member.

The first holding member 2 exhibits an upper limiting surface 7, and a lower limiting surface 8. A first and a second groove 9, 10 are situated in the lower limiting surface 8. These two grooves are utilised for the formation of recesses, intended to pinch one pipe each.

In a preferred embodiment the first holding member 2 comprises a first groove 9, formed by a first and second lateral surface 9', 9", and a bottom surface 9"', connecting the first lateral surface 9' to the second lateral surface 9". The three surfaces have their edges flush against each other, and are inclined 120° with respect to each other, and thereby form a wedge-shaped groove. The bottom surface 9"' constitutes one side of a hexagon, and therefore exhibits a width B, corresponding to one side of the hexagonal deformation 30 of a pipe 31, intended to be fixated by said device 1. The two lateral surfaces 9' and 9" have a height H, preferably slightly exceeded by the width B of one side of the hexagonal cross-section of the pipe to be fixated. The cross-section of said groove 9 constitutes three sides of a hexagon. The other groove 10 is designed in the same way as the first groove 9, and exhibits a first and a second lateral surface 10', 10", and a bottom surface 10"'.

The first and second grooves 9, 10 are separated by a ridge 11, which is limited by the second lateral surface 9" of the first groove 9, by the first lateral surface 10' of the second groove 10, and by a planar top surface 12.

The planar top surface 12 faces a corresponding top surface 21 of a ridge 20, arranged at the upper limiting surface 24 of the second holding member 3. Above-mentioned threaded hole 6 is situated on the ridge 20 of the second holding member. The ridge 20 of the second holding member is limited by a first and second lateral surface 22, 23, and the planar top surface 21. The lateral surfaces 22, 23 are flush against the planar top surface 21 of the second holding member, and are inclined 120° with respect to the planar top surface 21 of the second holding member. The upper limiting surface 24 of the second holding member, and the first lateral surface 22 of the ridge, constitute two sides of a hexagon, which are intended to be flush against the corresponding sides of a pinched pipe. The two lateral surfaces 22 and 23 have an extension, which is preferably slightly exceeded by the width B of a side of the hexagonal cross-section of the pipe to be fixated.

In the shown preferred embodiment one of the sides of the hexagon is left open, whereby, when the holding members are fixed with respect to each other, an opening 40 extends along the whole width of the holding member in connection to each of the grooves. This entails that the demands on the uniformity of the pipe is reduced, whereby a good fixation can be obtained for pipes with slightly differing cross-sections.

The height of the ridge 11 of the first holding member, and that of the ridge 20 of the second holding member is adjusted in such a way that the top surfaces of the ridges do not bear against each other when a pipe with the intended cross-section is attached.

The second holding member further exhibits an inlet 25, which is used for attaching the holder to an underlying structure, for instance, an internal combustion engine.

The holding members are preferably manufactured from extruded aluminium, but can also be made from other materials and metals with comparable strength and weight characteristics.

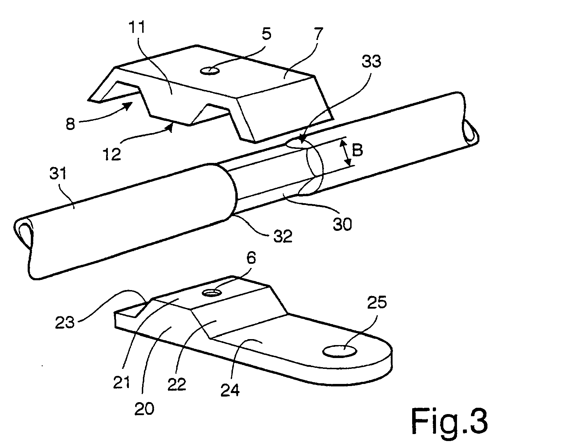

The design of the pipe is shown in Fig. 3. The pipe 31 exhibits a circular cross-section along the main part of the length of the pipe 31. The pipe further exhibits at least one area 30 with a hexagonal cross-section. The area is limited by first and second shoulder parts 32, 33, formed by the junction between the deformed and the non-deformed area. Preferably, this hexagonal cross-section is achieved through deformation of the pipe in said area 30. In a particularly preferred embodiment the pipe is deformed in connection to its mounting and fixation, which entails that the position of the deformation can be determined with high accuracy.

The invention is not limited to the embodiment that has been described above, and shown in the figures, but can be varied within the scope of the appended claims. For example, other locking members, different from the shown screw, may be used, such as an eccentric pinching member mounted on a shaft attached to the second holding member, whereby said eccentric acts against the upper limiting surface 7 of the first holding member.

## Claims

1. A device for fixation of a pipe, which device comprises a first and second holding member (2, 3) which in a joined condition exhibit a recess (41) intended to at least partly enclose the pipe, and a locking member (4) for fixation of the holding members (2,3) to each other whereby a pinching of the pipe is achieved,
said first holding member (2) exhibiting a wedge-shaped groove (9) comprising a first and a second flat lateral surface (9', 9") and a bottom surface (9"') connecting said first flat lateral surface (9'') to said second flat lateral surface (9') said first and second flat lateral surfaces (9',9'') being intended during pinching of said pipe to bear against two corresponding surfaces of the pipe,
said second holding member (3) comprising an upper limiting surface (24) opposite said bottom surface (9''') of said groove (9) of said first holding member, and a lateral surface (22) opposite said second flat lateral surface (9') of said groove (9), **characterised in that** said upper limiting surface (24) and said lateral surface (22) are intended during pinching of said pipe to bear against corresponding surfaces of the pipe, and **in that** in said upper limiting surface (24) is planar such that in said joined condition of said device, said upper limiting surface (24) and said first holding member (2) delimit an opening (40) open in a direction towards said lateral surface (22) of the second holding member (2) and extending along the whole width of the holding members.

2. A device according to claim 1, **characterised in that** said wedge-shaped groove (9) is symmetrical with respect to said upper limiting surface (24) of the second holding member (3), whereby conical positioning of the pipe against the upper limiting surface (24) of the second holding member (3) is achieved during constriction of the pipe.

3. A device according to any of the preceding claims, **characterised in that** said locking member (4) comprises a pilot intended to guide the movement of the first holding member (2) with respect to the second holding member (3) during the course of a constriction of said pipe, and that said pilot allows the first holding member (2) to be displaced perpendicularly to the upper limiting surface (24) of the second holding member (3).

4. A device according to any of the preceding claims, **characterised in that** said first (2) and second (3) holding members in joined condition exhibit two recesses intended to at least partly enclose one pipe each.

5. A device according to any of the preceding claims, **characterized in that** said locking member (4) consists of a nipple joining said holding members (2,3).

6. A device according to any of the preceding claims, **characterised in that** said recess (41) exhibits a polygon-shaped cross-section with five, six, seven, or eight sides.

7. A device according to claim 6,**characterised in that** said recess (41) exhibits a hexagonal cross-section.

8. A device according to claim 7, **characterised in that** said locking member (4) consists of a nipple joining said holding members (2,3)

9. A pipe (31) and a device as claimed in any one of the preceding claims for fixation of said pipe, in which the pipe (31) exhibits a circular cross section along the major part of the length of the pipe and at least one deformed area (30) situated at the pipe between two shoulder sections (32, 33), said shoulder sections being formed by the junction between the deformed area (30) and a non-deformed area,
the recess (41) of the device having a cross-section corresponding to the cross-section of the deformed area (30) of the pipe, whereby said recess (41) is intended to at least partly enclose said deformed area, wherein the pipe in said deformed area (30) exhibits a polygonal cross-section whereby the mantle surface of the pipe in the deformed area is formed by at least five planar surfaces.

## Patentansprüche

1. Vorrichtung zur Befestigung eines Rohres, welche ein erstes und ein zweites Halteteil (2, 3) aufweist, die im zusammengefügten Zustand eine Aussparung (41) aufweisen, die dazu vorgesehen ist, zumindest zum Teil das Rohr zu umschließen, und ein Feststellteil (4) zum Befestigen der Halteteile (2, 3) aneinander, wodurch eine Quetschung des Rohres erreicht wird, wobei das erste Halteteil (2) eine keilförmige Nut (9) aufweist, die eine erste und eine zweite flache Seitenfläche (9', 9") und eine Bodenfläche (9"') umfasst, welche die erste flache Seitenfläche (9") mit der zweiten flachen Seitenfläche (9') verbindet, wobei die erste und die zweite flache Seitenfläche (9', 9") zur Anlage gegen zwei entsprechende Flächen des Rohres während der Quetschung des Rohres vorgesehen sind, und wobei das zweite Halteteil (3) eine obere Begrenzungsfläche (24) gegenüber der Bodenfläche (9"') der Nut (9) des ersten Halteteils sowie eine Seitenfläche (22) gegenüber der zweiten flachen Seitenfläche (9') der Nut (9) aufweist,
**dadurch gekennzeichnet, dass** die obere Begrenzungsfläche (24) und die Seitenfläche (22) zur Anlage gegen entsprechende Flächen des Rohres während der Quetschung des Rohres vorgesehen sind, und dass die obere Begrenzungsfläche (24) eben ist, so dass im zusammengefügten Zustand der Vorrichtung die obere Begrenzungsfläche (24) und das erste Halteteil (2) eine Öffnung (40) begrenzen, welche in einer Richtung zur Seitenfläche (22) des zweiten Halteteils (2) hin offen ist und sich über die gesamte Breite der Halteteile erstreckt.

2. Vorrichtung nach Anspruch 1, **dadurch gekennzeichnet, dass** die keilförmige Nut (9) bezüglich der oberen Begrenzungsfläche (24) des zweiten Halteteils (3) symmetrisch ist, wodurch während der Einengung des Rohres eine konische Positionierung des Rohres gegen die obere Begrenzungsfläche (24) des zweiten Halteteils (3) erzielt wird.

3. Vorrichtung nach einem der vorhergehenden Ansprüche, **dadurch gekennzeichnet, dass** das Feststellteil (4) ein Führungselement aufweist, das zur Führung der Bewegung des ersten Halteteils (2) bezüglich des zweiten Halteteils (3) während des Verlaufs einer Einengung des Rohres vorgesehen ist, und dass das Führungsteil eine Verschiebung des ersten Halteteils (2) senkrecht zur oberen Begrenzungsfläche (24) des zweiten Halteteils (3) ermöglicht.

4. Vorrichtung nach einem der vorhergehenden Ansprüche, **dadurch gekennzeichnet, dass** das erste (2) und das zweite Halteteil (3) im zusammengefügten Zustand zwei Aussparungen aufweisen, die dazu vorgesehen sind, jeweils ein Rohr zumindest teilweise zu umschließen.

5. Vorrichtung nach einem der vorhergehenden Ansprüche, **dadurch gekennzeichnet, dass** das Feststellteil (4) aus einem Nippel besteht, welcher die Halteteile (2, 3) miteinander verbindet.

6. Vorrichtung nach einem der vorhergehenden Ansprüche, **dadurch gekennzeichnet, dass** die Aussparung (41) einen mehreckig geformten Querschnitt mit fünf, sechs, sieben oder acht Seiten aufweist.

7. Vorrichtung nach Anspruch 6, **dadurch gekennzeichnet, dass** die Aussparung (41) einen sechseckigen Querschnitt aufweist.

8. Vorrichtung nach Anspruch 7, **dadurch gekennzeichnet, dass** das Feststellteil (4) aus einem Nippel besteht, welcher die Halteteile (2, 3) miteinander verbindet.

9. Rohrleitung (31) und Vorrichtung nach einem der vorhergehenden Ansprüche zur Befestigung eines Rohres, bei welchen das Rohr (31) einen runden Querschnitt über den größeren Teil der Rohrlänge sowie mindestens einen verformten Bereich (30) aufweist, der sich an dem Rohr zwischen zwei Absatzbereichen (32, 33) befindet, wobei die Absatzbereiche durch den Anschluss zwischen dem verformten Bereich (30) und einem nicht verformten Bereich gebildet werden, wobei die Aussparung (41) der Vorrichtung einen Querschnitt aufweist, welcher dem Querschnitt des verformten Bereichs (30) des Rohres entspricht, so dass die Aussparung (41) dazu vorgesehen ist, zumindest teilweise den verformten Bereich zu umschließen, wobei das Rohr in dem verformten Bereich (30) einen mehreckigen Querschnitt aufweist, so dass die Mantelfläche des Rohres in dem verformten Bereich von mindestens fünf ebenen Flächen gebildet wird.

## Revendications

1. Dispositif de fixation d'un conduit, lequel dispositif comprend un premier et un deuxième éléments de maintien (2, 3) qui, dans un état joint, présentent un renfoncement (41) destiné à entourer au moins partiellement le conduit, un élément de verrouillage (4) pour fixer les éléments de maintien (2, 3) l'un à l'autre, de sorte qu'une force de pincement s'exerce sur le conduit ;
ledit premier élément de maintien (2) présentant une gorge cunéiforme (9) comprenant une première et une deuxième surfaces latérales plates (9', 9") et une surface de fond (9"') reliant ladite première surface latérale plate (9") à ladite deuxième surface latérale plate (9'), lesdites première et deuxième surfaces latérales plates (9', 9") étant destinées à s'appuyer pendant le pincement dudit conduit contre deux surfaces correspondantes du conduit,
ledit deuxième élément de maintien (3) comprenant une surface limitante supérieure (24) opposée à ladite surface de fond (9"') de ladite gorge (9) dudit premier élément de maintien, et une surface latérale (22) opposée à ladite deuxième surface latérale plate (9') de ladite gorge (9),
***caractérisé en ce que*** ladite surface limitante supérieure (24) et ladite surface latérale (22) sont destinées à s'appuyer pendant le pincement dudit conduit contre des surfaces correspondantes du conduit, et ***en ce que*** ladite surface limitante supérieure (24) est plane, de telle sorte que, dans ledit état joint dudit dispositif, ladite surface limitante supérieure (24) et ledit premier élément de maintien (2) délimitent une ouverture (40) ouverte dans une direction orientée vers ladite surface latérale (22) dudit deuxième élément de maintien (2) et s'étendant sur toute la largeur des éléments de maintien.

2. Dispositif selon la revendication 1, ***caractérisé en ce que*** ladite gorge cunéiforme (9) est symétrique par rapport à ladite surface limitante supérieure (24) du deuxième élément de maintien (3), de telle sorte qu'un positionnement conique du conduit contre la surface limite supérieure (24) du deuxième élément de maintien (3) est obtenu pendant la constriction du conduit.

3. Dispositif selon l'une quelconque des revendications précédentes, ***caractérisé en ce que*** ledit élément de verrouillage (4) comprend un pilote destiné à guider le mouvement du premier élément de maintien (2) par rapport au deuxième élément de maintien (3) au cours d'une constriction dudit conduit, et ***en ce que*** ledit pilote permet au premier élément de maintien (2) d'être déplacé perpendiculairement à la surface limitante supérieure (24) du deuxième élément de maintien (3).

4. Dispositif selon l'une quelconque des revendications précédentes, ***caractérisé en ce que*** lesdits premier (2) et deuxième (3) éléments de maintien présentent, dans l'état joint, deux renfoncements destinés à entourer au moins partiellement un conduit chacun.

5. Dispositif selon l'une quelconque des revendications précédentes, ***caractérisé en ce que*** ledit élément de verrouillage (4) consiste en un raccord fileté joignant lesdits éléments de maintien (2, 3).

6. Dispositif selon l'une quelconque des revendications précédentes, ***caractérisé en ce que*** ledit renfoncement (41) présente une section transversale polygonale à cinq, six, sept ou huit côtés.

7. Dispositif selon la revendication 6, ***caractérisé en ce que*** ledit renfoncement (41) présente une section transversale hexagonale.

8. Dispositif selon la revendication 7, ***caractérisé en ce que*** ledit élément de verrouillage (4) consiste en un raccord fileté joignant lesdits éléments de maintien (2, 3).

9. Conduit (31) et dispositif selon l'une quelconque des revendications précédentes destiné à la fixation dudit conduit, dans lequel le conduit (31) présente une section transversale circulaire sur la majeure partie de la longueur du conduit et au moins une zone déformée (30) située au niveau du conduit entre deux sections d'épaulement (32, 33), lesdites sections d'épaulement étant formées par la jonction entre la zone déformée (30) et une zone non déformée,
le renfoncement (41) du dispositif ayant une section transversale correspondant à la section transversale de la zone déformée (30) du conduit, ledit renfoncement (41) étant destiné à entourer au moins partiellement ladite zone déformée, le conduit présentant une section polygonale dans ladite zone déformée (30), la surface d'enveloppe du conduit étant formée, dans la zone déformée, par au moins cinq surfaces planes.
